# EUROPEAN PATENT APPLICATION

(11) **EP 2 832 689 A1**
(43) Date of publication of application: **04.02.2015**
(21) Application number: 13382311.2
(22) Date of filing: 30.07.2013
(51) Int. Cl.: C01B 31/04, C09D 5/24, C09D 7/12, C09D 11/00, C08K 3/24

(54) **Graphene dried powder and method for its preparation**

(71) Applicant: Fundación Imdea Nanociencia, 28049 Madrid (ES); Universidad Autónoma De Madrid (UAM), 28049 Madrid (ES); Abengoa Research S.L., 41014 Sevilla (ES)
(72) Inventor: Miranda Soriano, Rodolfo, 28760 Tres Cantos (ES); Zamora Abanades, Félix Juan, 28210 Valdemorillo (ES); Mas-Ballesté, Rubén, 28400 Collado Villalba (ES); Azani, Mohammad-Reza, 28028 Madrid (ES); Carcelén Valero, Verónica, 41014 Sevilla (ES); Doblaré Castellano, Manuel, 41014 Sevilla (ES)
(74) Representative: ABG Patentes, S.L.

(57) **Abstract**

The present invention relates to a process for preparing graphene dried powder, comprising a) sonication of graphite in a mixture of water and a volatile organic solvent; b) centrifugation of the product obtained in step a); c) filtration of the product obtained in step b) to remove graphene flakes having lateral dimensions larger than 1 µm x 1 µm; d) addition of a precipitating agent to the solution obtained in step c) to precipitate the graphene flakes, and filtration to collect graphene dried powder; or alternatively, d') solvent evaporation to obtain graphene dried powder. The invention also relates to the graphene dried powder obtainable by said process and its use for preparing a graphene flake composition for coating surfaces.

## Description

### Field of the art

The present invention relates to graphene dried powder and to a method for its preparation. Furthermore, the invention also relates to compositions prepared with said graphene dried powder and to a method for their preparation. Said compositions are able to homogeneously cover surfaces of different materials and are especially suitable in printing techniques such as in ink-jet printing, spray deposition, centrifugation techniques, spin coating, electrospray, drop casting, Meyer rod method and dip coating.

### State of the Art

Graphene is a material with extraordinary electronic, mechanical, optical and thermal properties (A. K. Geim and K. S. Novoselov, Nat. Mater., 2007, 6, 183-191). Nevertheless, the properties of graphene such as the quality of the material, type of defects or substrate and, hence, the pool of applications that can utilize it are still strongly affected by the production method used to obtain it.

Among the multiple applications of graphene, graphene-based compositions, in particular graphene-based inks, are expected to be very useful in printed or flexible electronics, touch screens, electronic paper, electromagnetic shielding, barrier coatings, heat dissipation, supercapacitors, smart windows, etc. A number of flake-based products can be expected in the marketplace within a few years' time, and prototype applications for conductive inks have already been demonstrated on a commercial level.

In spite of the seemingly endless potential of graphene-based compositions, in particular graphene-based inks, for applications and its impressive properties in the laboratory, nowadays, graphene inks based technologies are not yet available. Furthermore, there is still no accepted way to produce large area graphene sheets with high enough reproducibility. Despite the very large number of patents filled every year concerning graphene applications, there are, to the best of our knowledge, no final products reaching the markets. This is attributed to the limitations of up-scaling graphene production with sufficiently high quality and yield for the target application/product. As a consequence, scalable graphene inks with nontoxic solvents are still needed.

Liu et al. (Liu W. et al, Front. Mater. Sci., 2012, 6(2), 176-182) report a method for exfoliation and dispersion of graphene in ethanol/water mixtures. The fraction of ethanol in the mixture was found to be crucial to both the exfoliation and dispersion and the maximum concentration of graphene was observed in the aqueous solution containing 70 vol.% ethanol. Liu et al. report graphene dispersions with 50-80 vol.% ethanol. The prepared graphene is of few layers and mono-layers with well-maintained graphitic structure. Liu et al do not mention the possibility to use other solvents in the same procedure. Han et al. (X. Han et al., Nanotech., 2013, 24, 205304) report a printable graphene ink in ethanol and water, free of any surfactant. Han et al. show that the increase of the ethanol amount in the mixture ethanol/water from 0:1 to 1:1 v/v improves the wetting of graphene ink on a plastic PET substrate. However, since the ethanol evaporates much faster than water, many droplets are still formed during the drying giving place to coffee rings and eventually to an inhomogeneous coverage. Yi et al (Yi et al., J. Nanopart. Res., 2012, 14, 1003) report a mixed-solvent strategy for the green preparation of graphene by exfoliating crystal graphite powder in a water-alcohol mixture, achieving a stabilized graphene dispersion. In particular the sonication of crystal graphite is carried out in a mixture of 40% water-ethanol and 55% water-isopropanol. Yi et al. (Yi et al., J. Phys. D: Appl. Phys., 2013, 46, 025301) report graphene dispersions in water/acetone mixtures at different concentrations. The method used to prepare such dispersions is based on the exfoliation of graphite in water/acetone mixtures. Tailoring the Hansen Solubility parameters (HSP) of water/acetone mixtures to approach the HSP of graphene could yield graphene dispersions at a high concentration of up to 0.21 mg ml-1. They determined that an optimum composition of the mixtures occurs at an acetone mass fraction of ∼75%.

Torrisi et al. (Torrisi et al., Am. Chem. Soc. Nano., 2012, 6(4), 2992-3006) disclose graphene inks obtained by the exfoliation of graphite by chemical wet dispersion followed by ultrasonication in aqueous and non-aqueous solvents. They use N-methylpyrrolidone (NMP) and HDMS as solvents in order to reduce the coffee ring effect in the coating. However these solvents are toxic and require long drying times or high temperatures. Ethan B. Secor et al. (Ethan B. Secor et al., The journal of Phys. Chem. letters, 2013, 4, 1347-1351) disclose a graphene ink formulation prepared by solution phase exfoliation of graphene using ethanol as solvent with ethyl cellulose(EC) as stabilizing polymer. The graphene/EC powder obtained is dispersed in a mixture of cyclohexanone/terpineol. Stabilizing agents usually leave persistent residues that are difficult to remove.

Although the production of graphene flakes through an exfoliation process using certain solvents in the presence of relative high amount of water is a well-known procedure in the state of the art, the preparation of graphene flake dispersions with enough stability to be used as inks remains a goal to be achieved. Some solvents and surfactant/solvents mixtures have shown positive results for exfoliation and dispersion of graphene in the state of the art. However, the solvents used so far are expensive, toxic and with high boiling points requiring long times to dry (as for example NMP). The aqueous dispersions used have a high surface energy needing additional wetting agents or surfactants for a good wetting or drying. For specific electronic applications the persistent residues left by these agents need to be removed after the film deposition since their isolating electrical properties disrupt the film conductivity. In view of the above, improved graphene flake compositions, in particular graphene inks, and processes for their preparation are still needed in the art.

This application shows results on scalable methods to obtain graphene dried powder which, in turn, can be employed, among others, to prepare graphene flake compositions showing a dispersion of uniform size flakes of graphene in organic volatile solvents. The inks prepared from these graphene flake compositions, as well as the graphene flake compositions themselves are suitable for ink-jet printing, spray deposition, centrifugation techniques, spin coating, drop casting, dip coating, electrospray and Meyer rod method to homogeneously coat surfaces of different materials.

### Brief description of the invention

The object of the present invention is to provide a process for preparing graphene dried powder, the graphene dried powder obtained according to this process and, also, graphene flake compositions prepared from graphene dried powder. Said graphene dried powder is a few layers graphene, constituted by graphene flakes, having said graphene dried powder a thickness of between 2 and 8 nm (including the end points of the range) and lateral dimensions of less than 1 µm x 1 µm. Moreover, said graphene dried powder preferably contains less than 1% of water (w/w). The graphene dried powder obtained according to the process of the present invention unexpectedly shows the property of being dispersable or redispersable in a matrix. This matrix is preferably cement, curable material, and volatile organic solvent, optionally including water. In a particular embodiment, the matrix can be selected from volatile organic solvent substantially devoid of water and, in other particular embodiment, volatile organic solvents are mixed with water, so that water content in the composition is up to 30% (v/v). Accordingly, the redispersion of the graphene dried powder in a matrix results in the graphene flake compositions of the invention. When the matrix is a volatile organic solvent, the graphene flake compositions may include up to 30% of water. In a particular embodiment, these compositions can be substantially devoid of water. Said graphene flake compositions, in particular those substantially devoid of water, present a high stability in the absence of surfactants or stabilizers which produce undesired residues. Moreover, the good wetting or drying of the graphene flake compositions of the invention, in particular of those substantially devoid of water, allows their application for inkjet printing, spray deposition, centrifugation techniques and spin-coating, which present a very homogeneous coverage, avoiding additionally the undesired coffee ring effect.

Therefore in a first aspect, the invention is directed to a process for preparing graphene dried powder, comprising the following steps:
a) sonication of graphite in a mixture of water and a volatile organic solvent;
b) centrifugation of the product obtained in step a);
c) filtration of the product obtained in step b) to remove graphene flakes having lateral dimensions larger than 1 µm x 1 µm;
d) addition of a precipitating agent to the solution obtained in step c) to precipitate the graphene flakes, and filtration to collect graphene dried powder; or alternatively,
d') solvent evaporation to obtain graphene dried powder.

In a second aspect, the invention is directed to a graphene dried powder obtainable according to the process defined above.

In a further aspect, the invention is directed to a process for preparing a graphene flake composition comprising graphene flakes having lateral dimensions of less than 1 µm x 1 µm and a matrix, said process comprising the step (e) of redispersing the graphene dried powder obtained according to the previous process in a matrix.

In still a further aspect, the invention is directed to graphene flake composition comprising graphene flakes having lateral dimensions of less than 1 µm x 1 µm dispersed in a matrix.

In another aspect, the invention is directed to the use of graphene dried powder of the invention for the preparation of a graphene flake composition.

In other aspect, the invention relates to an ink composition comprising the graphene flake composition defined above.

Finally, in another aspect, the invention relates the use of the graphene flake compositions of the invention, in particular the ink compositions. A preferred use of said compositions of the invention is coating surfaces; in particular, ink-jet printing, spray deposition, centrifugation techniques, spin-coating, drop casting, Meyer rod method and dip coating.

### Figures

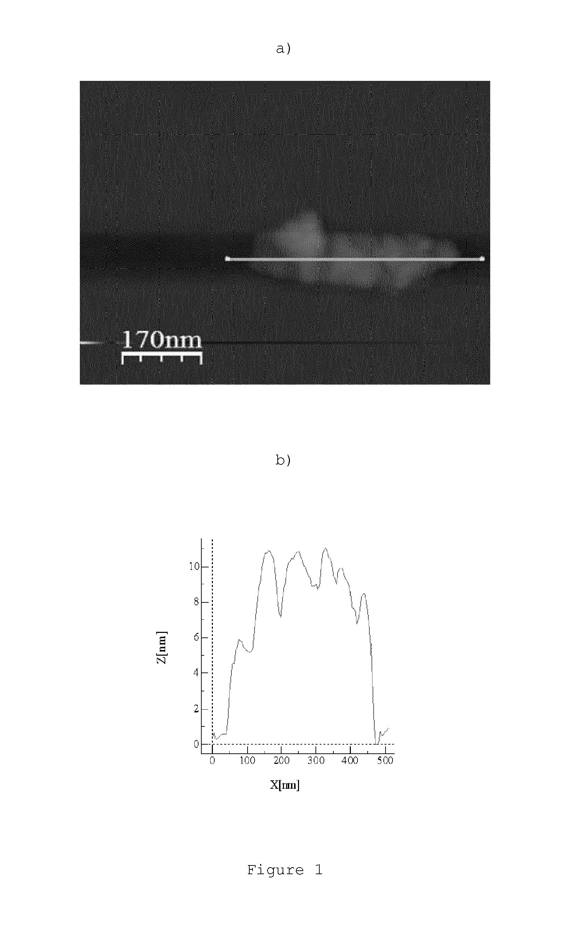

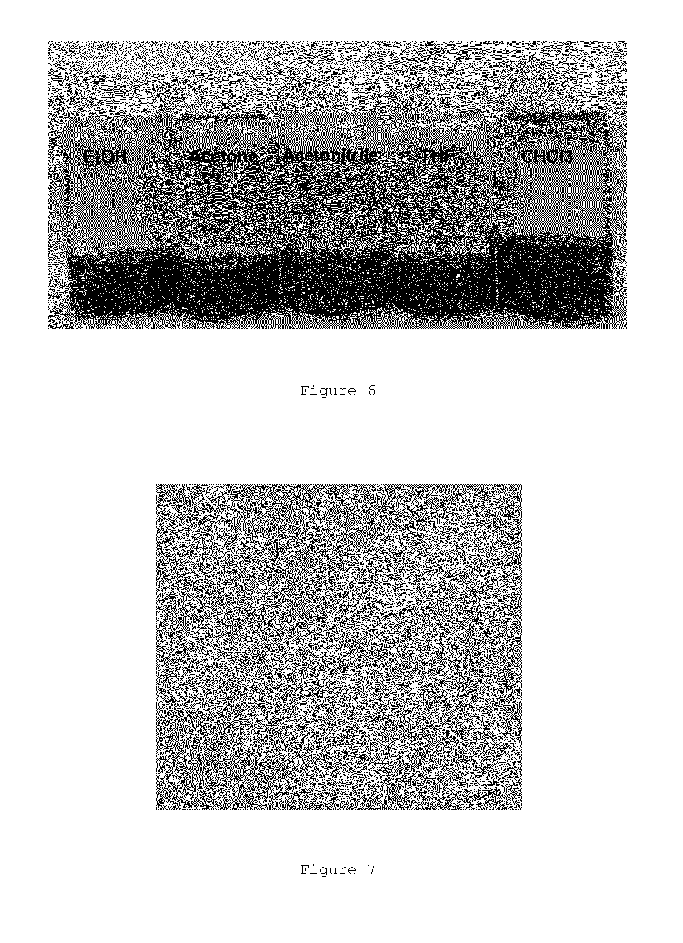

Figure 1: AFM characterization of graphene dried powder obtained according to example 2.
   (a)Topographic AFM image of graphene dried powder obtained according to example 2 showing lateral dimensions of 600 nm x 200 nm, and (b) height profile of said graphene dried powder showing a thickness between 2-8 nm.
Figure 2:
   (a, b) HRTEM image and electron diffraction pattern of dispersion-cast of graphene dried powder showing few layers graphene flakes obtained after step c) of the process of the invention (sonication at 380 W in THF:water (4:1), centrifugation at 550 g during 30 min. and filtration), then diluted to reach a mixture of THF:water 9:1, and then sprayed over SiO₂, while said SiO₂ is heated at 175°C.
   (c, d) AFM image and the corresponding height profile of the surface of graphene dried powder showing few layers graphene flake isolated on SiO₂ as prepared for (a, b).
Figure 3: Raman spectrum of graphene dried powder deposited on SiO₂, obtained as for figure 2.

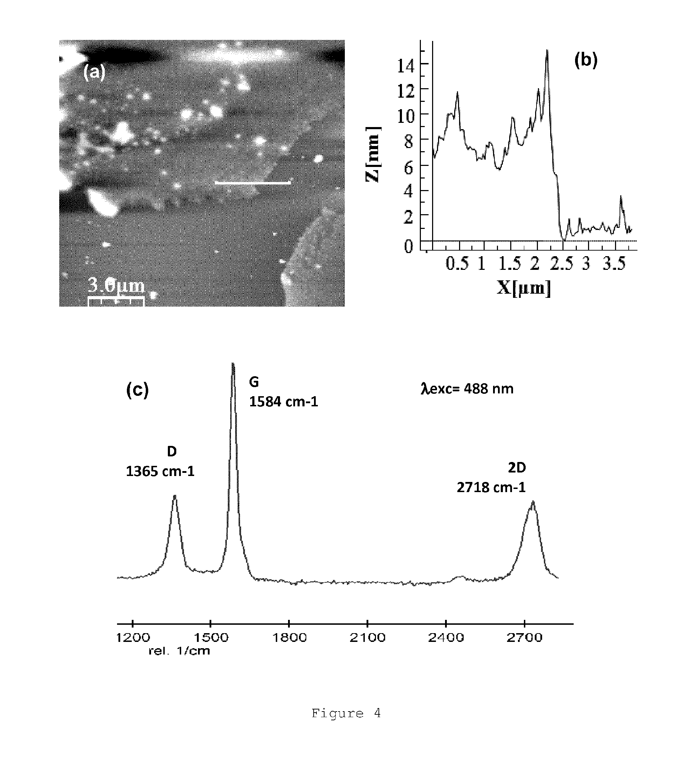

Figure 4: (a, b) AFM image and height profile (10 nm height) and (c) Raman spectrum of a layer prepared with graphene dried powder obtained according to the process of the invention: sonication at 380 W in THF:water (4:1), centrifugation at 550 g during 30 min. and filtration) and then redispersed in THF-water 80%. The composition is deposited on SiO₂ by ink-jet printing on SiO₂
Figure 5:
   (a) Graphene flake composition obtained after step c) of the process of the invention in THF:water (4:1), deposited by spray method in a glass substrate, while heated at 175°C. The white rings correspond with "coffee rings" due to water content.
   (b) Redispersed graphene dried powder in THF, deposited by spray method in glass substrate, while heated at 175°C
Figure 6: Vials containing 1 mg of graphene dried powder redispersed (step e) in 10 ml of different volatile organic solvents: ethanol, acetone, acetonitrile, THF and chloroform.
Figure 7: Optical image of graphene dried powder redispersed in THF and deposited on a glass substrate by centrifugation (described in example 7b).

### Detailed description of the invention

The present invention is directed, in a first aspect, to a process for preparing graphene dried powder.

In the context of the present invention, the expression "graphene dried powder" relates to a few layers graphene, constituted by graphene flakes, having said graphene dried powder a thickness of between 2 and 8 nm (including the end-points of the range) and lateral dimensions of less than 1 µm x 1 µm. Moreover, said graphene dried powder preferably contains less than 1% of water. As explained in detail above, the graphene dried powder obtained according to the process of the present invention unexpectedly shows the property of being dispersable or redispersable in a matrix. The graphene dried powder differs from graphite in that the latter must be exfoliated by a liquid phase exfoliation method to be dispersed in a matrix.

Thus, process for preparing graphene dried powder according to the first aspect of the present invention comprises the following steps:
a) sonication of graphite in a mixture of water and a volatile organic solvent;
b) centrifugation of the product obtained in step a);
c) filtration of the product obtained in step b) to remove graphene flakes having lateral dimensions greater than 1 µm x 1 µm;
d) addition of a precipitating agent to the solution obtained in step c) to precipitate the graphene flakes, and filtration to collect graphene dried powder; or alternatively,
d') solvent evaporation to obtain graphene dried powder.

The starting graphite material used to obtain the flakes is natural graphite not limited to any particular size or form. The graphite material may be in form of powder or flakes. In a particular embodiment the starting graphite particles have a diameter between 150 µm and 100 µm, preferably between 100 µm and 45 µm, even more preferably below 45 µm.

The term "graphene" in the present application relates to one-atom thick layer of the mineral graphite wherein the carbon atoms are disposed in a regular hexagonal pattern. The term "graphene flake" relates to two or more graphene P-stacked layers. The term "lateral dimensions" is used to define the length and width of the surface of the graphene flakes. The term "height" relates to the number of graphene sheets stacked together in the graphene flake. Thus, the height in the graphene flakes increases with the number of stacked sheets.

In the process of the present invention, graphite is sonicated in a mixture of organic solvent and water in order to exfoliate the graphite into graphene flakes. According to a particular embodiment graphite is sonicated in a mixture containing at least 10% w/w water, preferably at least 15% w/w water, more preferably in a mixture containing between 15% w/w and 25% w/w water, even more preferably in a mixture containing between 25% w/w and 40% w/w water.

In the present invention, the term "volatile organic solvent" relates to solvents with a boiling point below 100°C at atmospheric pressure. In a particular embodiment the volatile organic solvent has a boiling point below 90°C, preferably below 85°C, more preferably below 80°C, even more preferably below 75°C or below 70°C. In a particular embodiment the volatile organic solvent has a boiling point comprised between 30°C and 100°C, preferably between 30° and 90°C, more preferably between 35°C and 80°C. In a further particular embodiment, the volatile organic solvent is selected from halogenated solvents (e.g. dichloromethane, dichloroethane, chloroform, carbon tetrachloride, ethylene dichloride), cyclic or acyclic ethers (e.g. 1,4 dioxane, tetrahydrofuran, methyltetrahydrofuran), hydrocarbonated solvents (e.g. pentane, hexane, cyclohexane), ketones (e.g. acetone), esters (e.g. ethyl acetate), nitriles(e.g. acetonitrile, nitrobenzene), alcohols (e.g. C1-6 alkyl alcohol, such as methanol, ethanol, 1-propanol, 2-methyl-2-propanol, n-propanol, isopropanol) and mixtures thereof. The volatile organic solvent is preferably selected from C1-C6 alkyl alcohols (e.g. methanol, ethanol, propanol, butanol, pentanol), tetrahydrofurane, acetone, acetonitrile and mixtures thereof. In a most preferred embodiment the volatile organic solvent is preferably selected from dichloromethane, acetonitrile, tetrahydrofurane, acetone, alkyl alcohols and mixtures thereof. The sonication power to be employed is preferably between 100 and 400 Watts. More preferably the sonication power is between 200 and 400 Watts, more preferably between 300 and 400 Watts. In a particular embodiment, graphite is sonicated at 165 or 380 Watts. Preferably, graphite is sonicated for a period of time comprised between 1 hour and 3 hours, more preferably between 1 hour and 2 hours. In a preferred embodiment, the time of sonication is 90 min.

According to the process of the invention, the graphene flake dispersions resulting from the sonication step a) are next centrifugated, in particular ultracentrifugated. In a particular embodiment, the dispersion is decanted before centrifugation. Preferably, the graphene flake dispersions are centrifugated at a rotational speed comprised between 2000 and 4000 revolutions per minute (rpm).

The centrifugated dispersion resulting from step b) is next filtered to remove the graphene flakes having lateral dimensions greater than 1 µm x 1 µm. This filtration can be performed employing, for instance, syringe filter PTFE membrane (diam. 25 mm, pore size 1.0 µm. Thus, a dispersion of graphene flakes having lateral dimensions less than 1 µm x 1 µm in a mixture of organic solvent and water is obtained.

Next, the dispersion of graphene flakes having lateral dimensions less than 1 µm x 1 µm in a mixture of organic solvent and water, in the same proportion as when it was sonicated, is either precipitated by the addition of a precipitating agent and filtered to obtain graphene dried powder (step d) or, alternatively, subjected to solvent evaporation to obtain graphene dried powder (step d').

Regarding precipitating step d, the term "precipitating agent" relates to any compound which is able to reduce the dispersibility of the graphene flakes in a solvent. The precipitating agent is preferably selected from diethyl ether, hexane or toluene and mixtures thereof. In a most preferred embodiment the precipitating agent is diethyl ether. The precipitated black powder is next filtrated to collect graphene dried powder. Said isolation, in particular filtration, can be easily done by employing, for instance, a syringe filter PTFE (polytetrafluoroethylene membrane. If the filtrated solid (graphene dried powder) contains more than 1% water w/w, in a particular embodiment, the filtrated solid can be dried, preferably under vacuum, for instance, at 10⁻² mbar, for a period of 0.5 to 2 h to achieve graphene dried powder containing less than 1% water w/w.

Regarding evaporating step d', the expression "high temperature and low pressure" relates to those temperatures and pressures needed to eliminate the organic volatile solvent and water. Said conditions can be applied for the period of time which is needed to eliminate the referred solvents; for instance, 1, 2, 3 or 4 hours. In a particular embodiment, "high temperature" relates to 100-200 °C. Examples of high temperatures are 70, 75, 80, 85, 90, 100, 120, 140, 160, 180 and 200°C. In a particular embodiment, the term "low pressure" relates to 10⁻²-10⁻³ mbar. Examples of low pressures are 10⁻³ mbar and 10⁻² mbar.

In the second aspect, the invention relates to graphene dried powder obtainable according to the process defined above. Thus, graphene dried powder is obtained after performing either step d or step d' of the process of the invention explained above. The graphene dried powder of the invention is few layers graphene powder having a thickness of at least 2 nm and lateral dimensions of less than 1 µm x 1 µm and contains less than 1% of water; preferably between 0.5% and 0.1%, and more preferably between 0.1% and 0.01%.

In a third aspect, the invention relates to process for preparing a graphene flake composition comprising graphene flakes having lateral dimensions of less than 1 µm x 1 µm and a matrix, said process comprising the step of redispersing the graphene dried powder obtained according to the process described above in a matrix.

The invention also relates to graphene flake compositions comprising graphene flakes having lateral dimensions of less than 1 µm x 1 µm dispersed in a matrix. Thus, in the context of the present invention the term "graphene flake composition" relates to graphene flakes having lateral dimensions of less than 1 µm x 1 µm dispersed in a matrix.

According to this process of the invention, the graphene dried powder obtained in the process described above is dispersed, that is redispersed, in a matrix.

In the context of the present invention the term "matrix" relates to any substance, liquid, gel or solid in which the graphene dried powder can be dispersed. In a particular embodiment the matrix is selected from a volatile organic solvent, curable material and cement.

Depending on the phase of the matrix (liquid, gel or solid), the dispersion of the graphene dried powder can be done either by the addition of the graphene dried powder to a liquid or by mixture of said graphene dried powder with a gel or a solid.

As explained above, graphene dried powder obtained according to the process of the present invention unexpectedly shows the property of being dispersable or redispersable in a matrix, in particular when the matrix is liquid. In said case, when redispersed in a liquid matrix, in particular in a volatile organic solvent, the graphene dried powder takes the form of graphene flakes.

The term "graphene flake" relates to two or more graphene P-stacked layers. The term "lateral dimensions" is used to define the length and width of the surface of the graphene flakes. The term "height" relates to the number of graphene sheets stacked together in the graphene flake. Thus, the height in the graphene flakes increases with the number of P-stacked layers. The graphene flakes have lateral dimensions of less than 1 µm x 1 µm, preferably below 800 nm x 800 nm, more preferably below 600 nm x 600 nm, even more preferably below 400 nm x 400 nm or below 200 nm x 200 nm. In a particular embodiment the lateral dimensions of the flakes in the invention are between 100 nm x 100 nm and 1 µm x 1 µm, preferably between 200 nm x 200 nm and 1 µm x 1 µm, preferably between 400 nm x 400 nm and 1 µm x 1 µm, more preferably between 600 nm x 600 nm and 800 nm x 800 nm. In a preferred embodiment the flakes have lateral dimensions of 600 nm x 200 nm. The height of the graphene flakes is between 2 to 8 nm (including the end-points of the range); preferably between 6 and 8 nm.

In the context of the present invention, the term "redispersed" has the same meaning as the term "dispersed", which is dispersing a solid in a matrix.

In the context of the present invention a graphene flake composition can also be referred to as redispersed graphene dried powder.

In the context of the present invention, the term "volatile organic solvent" relates to solvents with a boiling point below 100°C at atmospheric pressure. In a particular embodiment the volatile organic solvent has a boiling point below 90°C, preferably below 85°C, more preferably below 80°C, even more preferably below 75°C or below 70°C. In a particular embodiment the volatile organic solvent has a boiling point comprised between 30°C and 100°C, preferably between 30° and 90°C, more preferably between 35°C and 80°C. In a further particular embodiment, the volatile organic solvent is selected from halogenated solvents (e.g. dichloromethane, dichloroethane, chloroform, carbon tetrachloride, ethylene dichloride), cyclic or acyclic ethers (e.g. 1,4 dioxane, tetrahydrofuran, methyltetrahydrofuran), hydrocarbonated solvents (e.g. pentane, hexane, cyclohexane), ketones (e.g. acetone), esters (e.g. ethyl acetate), nitriles( e.g. acetonitrile, nitrobenzene), alcohols (e.g. C1-6 alkyl alcohol, such as methanol, ethanol, 1-propanol, 2-methyl-2-propanol, n-propanol, isopropanol) and mixtures thereof. The volatile organic solvent is preferably selected from C1-C6 alkyl alcohols (e.g. methanol, ethanol, propanol, butanol, pentanol), tetrahydrofurane, acetone, acetonitrile and mixtures thereof. In a most preferred embodiment the volatile organic solvent is preferably selected from dichloromethane, acetonitrile, tetrahydrofurane, acetone, alkyl alcohols and mixtures thereof.

The organic volatile solvent present in the graphene flake composition of the invention may include water. Actually, this water can preferably make up to 5, 10, 15, 20, 25 or even 30% (v/v) of the graphene flake composition of the invention; with the proviso that when water is present above 30%, in particular 20% or more particularly 10%, the organic volatile solvent is neither ethanol nor isopropanol nor acetone.

Moreover, the graphene flake compositions of the invention can also be substantially devoid of water. In the context of the present invention, by "substantially devoid of water" it is meant that the composition only includes the amount of water present in the organic volatile solvent, in particular in a purified or desiccated organic volatile solvent. In other words, no water has been added to the graphene dried powder. Thus, the graphene flake compositions substantially devoid of water present a content of water below 3% w/w. In a particular embodiment, the water content of said graphene flake compositions substantially devoid of water is below 2,5% w/w, preferably below 2% w/w, more preferably below 1,5% w/w, even more preferably below 1% w/w. In a particular embodiment the water content of said compositions is comprised between 1% w/w and 0.5% w/w, preferably between 0.5% w/w and 0.1% w/w and more preferably between 0.1% and 0.01%.

In the context of the present invention, the term "curable material" relates to polymeric material which by cross-linking of polymer chains becomes harder or thougher. Said cross-linking can be brough about by chemical additives, ultraviolet radiation, electron beam or heat. Examples of curable material are thermoset resin formulations like epoxy, vinylester, polyester, polyaniline, polylactic acid, etc.

In the context of the present invention, the term "cement" relates to a binder, to a substance that sets and hardens independently, and can bind other materials together.

As explained above, graphene dried powder obtained according to the process of the present invention unexpectedly shows the property of being dispersable or redispersable in a matrix, in particular when the matrix is liquid. In said case, when redispersed in a liquid matrix, in particular in a volatile organic solvent, the graphene dried powder takes the form of graphene flakes. Graphene flake compositions including a volatile organic solvent, in particular those substantially devoid of water, present a high stability in the absence of surfactants or stabilizers which produce undesired residues. Moreover, the good wetting or drying of the graphene flake compositions of the invention, in particular of those substantially devoid of water, allows their application for coating surfaces, in particular, inkjet printing, spray deposition, centrifugation techniques, spin-coating, drop casting, dip coating, electrospray and Meyer rod method which present a very homogeneous coverage, avoiding additionally the undesired coffee ring effect.

In other embodiment of the invention, the remaining unexfoliated graphite separated from the graphene flake composition by centrifugation (step c of the process), may be recycled to produce additional graphene flake compositions comprising graphene flakes having lateral dimensions of less than 1 µm x 1 µm in a solvent with a volatile organic solvent and water. These additional graphene flake compositions may be obtained after an appropriate treatment based on a sonication-centrifugation process. In a particular embodiment additional graphene flake compositions are produced after at least 3 cycles of sonication-centrifugation applied to the remaining unexfoliated graphite showing analogous microscopic and spectroscopic features to those described for the graphene flake compositions firstly produced.

### Ink compositions

A further aspect of the invention relates to an ink composition comprising the graphene flake composition of the invention defined above. In the present invention the term "ink composition" relates to a solution of pigment particles (graphene flakes) dispersed in a matrix which, in this case, is an organic volatile solvent as defined above. Ink compositions may include other ingredients as for example dyes, resins, lubricants, solubilizers, surfactants, particulate matter, fluorescers, and other materials which control the flow and thickness of the ink and the coverage appearance.

In a further aspect of the invention, the graphene flake compositions of the invention, in particular the ink compositions, are used for coating surfaces, ink-jet printing, spray deposition, centrifugation techniques and spin coating. Preferably the graphene flake compositions are used for selectively coating surfaces with films or patterns. Density of graphene flakes deposited on the surface is modulated by concentration of the graphene flake composition. Moreover, the small lateral dimensions of the flakes obtained through sonication procedures enables graphene flake dispersions for some specific deposition techniques such as ink-jet printing, spray deposition, centrifugation techniques, spin coating drop casting, dip coating, electrospray and Meyer rod method.

Inkjet printing is a non-impact process wherein droplets of ink are produced and deposited on a substrate in response to an electrical signal. Drop on demand inkjet printing has progressed from printing text and graphics to a tool for rapid manufacturing, being now a well-established technique to print thin-film transistors based on organic conducting and semiconducting inks. Inkjet printing is a promising technique for large-area fabrication of flexible plastic electronics. A variety of components can be printed, such as transistors, photovoltaic devices, organic light-emitting diodes (OLEDs), and displays.

Specifically, for inkjet printing applications, the printing conductive partners have been optimized for using graphene flake compositions as ink. In particular, the lateral size of the flakes was established below 1 µm, since they have to be 50 times smaller than the diameter of the nozzle to avoid clogging.

In a particular embodiment the lateral dimensions of the flakes in the graphene flake composition for use in inkjet printing are preferably below 1 µm x 1 µm, more preferably the lateral dimensions are comprised between 500 nm x 500 nm and 1 µm x 1µm, even more preferably between 300 nm x 300 nm and 700 nm x 700 nm.

In a particular embodiment the height of the flakes suitable for inkjet printing is between 2 and 8 nm (including end-points of the range). In a preferred embodiment the height of the flakes is between 6 and 8 nm.

In another embodiment the graphene flake compositions obtained are used in spray deposition. Spray deposition techniques are simple and powerful procedures for coating substrates with a graphene flake composition. In the context of the present invention, spray deposition is a technique wherein a device sprays a graphene flake composition through the air onto a surface. This technique is typically used for covering large surfaces with an even coating of liquid.

In another embodiment the graphene flake dispersions obtained are used in centrifugation techniques. Centrifugation techniques in the present application entail immersing the sample to be coated into the graphene flake composition and subsequently subjecting it to repeated centrifugations. The centrifugal force spreads the graphene flakes over the surface of the sample. After centrifuging, the sample is removed from the dispersion and dried.

In another embodiment the graphene flake dispersions obtained are used in spin-coating. In particular, in centrifugation techniques and in spin coating the density of graphene flakes deposited on the surface is modulated by the concentration of the graphene flake composition and the number of centrifuge cycles.

In a particular embodiment ink-jet printing spray deposition centrifugation techniques, spin-coating, drop casting, dip coating, electrospray and Meyer rod method have been used for coating surfaces such as metal surfaces (e.g. gold, silver, copper), semiconductors (SiO₂, monocrystalline silicon, polycrystalline silicon, amorphous silicon, cadmium telluride, copper indium selenide, copper indium sulfide), polymer surfaces (e.g. polyethylene terephthalate(PET), polycarbonate (PC), styrene, vinyl), paper surfaces( e.g. acetate paper, cardstock, chipboard, metal foil, vellum, cotton fiber, cover paper) and glass surfaces (e.g. silica, silicates). In a preferred embodiment ink-jet printing, spray deposition, centrifugation techniques and spin-coating have been used for coating surfaces. These surfaces can be preferably selected from SiO₂, gold, acetate paper and glass.

Graphene flake compositions, in particular the ink compositions of the present invention, are especially appropriated to be employed in the techniques referred above.

### Graphene flake composition with water content of at least 15% w/w.

In a different aspect the invention is directed to a graphene flake composition comprising graphene flakes having lateral dimensions of less than 1 µm x 1 µm, a volatile organic solvent and at least 15% v/v water, with the proviso that the volatile organic solvent is neither ethanol nor isopropanol nor acetone. In a particular embodiment the water content is at least 20% v/v, preferably the water content is comprised between 15 and 25% v/v, and more preferably the water content is comprised between 25 and 40% v/v.

In a particular embodiment, the volatile organic solvent is selected from halogenated solvents (e.g. dichloromethane, dichloroethane, chloroform, carbon tetrachloride, ethylene dichloride), cyclic or acyclic ethers (e.g. 1,4 dioxane, tetrahydrofuran, methiltetrahydrofuranmethyltetrahydrofuran), hydrocarbonated solvents (e.g. pentane, hexane, cyclohexane), esters (e.g. ethyl acetate), nitriles (e.g. acetonitrile, nitrobenzene), alcohols (e.g. C1-6 alkyl alcohol, such as methanol, 1-propanol, 2-methyl-2-propanol, n-propanol) and mixtures thereof. In a preferred embodiment, the volatile organic solvent used is selected from methanol, 1-propanol, tetrahydrofuran and acetonitrile and mixtures thereof.

The graphene flakes have lateral dimensions of less than 1 µm x 1 µm, preferably below 800 nm x 800 nm, more preferably below 600 nm x 600 nm, even more preferably below 400 nm x 400 nm or below 200 nm x 200 nm. In a particular embodiment, the lateral dimensions of the flakes in the invention are between 100 nm x 100 nm and 1 µm x 1 µm, preferably between 200 nm x 200 nm and 1 µm x 1 µm, preferably between 400 nm x 400 nm and 1 µm x 1 µm, more preferably between 600 nm x 600 nm and 800 nm x 800 nm. The height of the graphene flakes is between 2 and 8 nm (end-points included); most preferably the height of the flakes is between 6 and 8 nm.

The process for preparing a graphene flake composition comprising graphene flakes having lateral dimensions of less than 1 µm x 1 µm, a volatile organic solvent and at least 15% w/w water, with the proviso that the volatile organic solvent is neither ethanol nor isopropanol, nor acetone, comprises the following steps:
A) sonication of graphite in a mixture of water and a volatile organic solvent, with the proviso that said volatile organic solvent is neither ethanol nor isopropanol, nor acetone;
B) centrifugation of the product obtained in step B); and
C) filtration of the product obtained in step B) to remove graphene flakes having lateral dimensions greater than 1 µm x 1 µm.

According to this aspect of the invention, graphite is sonicated in a mixture of volatile organic solvent and water. According to a particular embodiment, graphite is sonicated in a mixture containing at least 10% v/v water, preferably at least 15% v/v water, more preferably in a mixture containing between 15% v/v and 25% v/v water, even more preferably in a mixture containing between 25% v/v and 40% v/v water. In a particular embodiment, the volatile organic solvent is selected from halogenated solvents (e.g. dichloromethane, dichloroethane, chloroform, carbon tetrachloride, ethylene dichloride), cyclic or acyclic ethers (e.g. 1,4 dioxane, tetrahydrofuran, methyltetrahydrofuran), hydrocarbonated solvents (e.g. pentane, hexane, cyclohexane), esters (e.g. ethyl acetate), nitriles (e.g. acetonitrile, nitrobenzene), alcohols (e.g. C1-6 alkyl alcohol, such as methanol, 1-propanol, 2-methyl-2-propanol, n-propanol) and mixtures thereof. In a preferred embodiment, the volatile organic solvent used is selected from methanol, 1-propanol, tetrahydrofuran and acetonitrile, and mixtures thereof.

The sonication power to be employed is preferably between 100 and 400 Watts. More preferably the sonication power is between 200 and 400 Watts, more preferably between 300 and 400 Watts. In a particular embodiment graphite is sonicated at 165 or 380 Watts. Preferably graphite is sonicated for a period of time comprised between 1 hour and 3 hours, more preferably between 1 hour and 2 hours. In a preferred embodiment the time of sonication is 90 min. Thus, graphene flake dispersions in a mixture of organic solvent and water are obtained.

The sonicated graphene flake dispersions are next centrifugated, in particular ultracentrifugated, preferably at a rotational speed comprised between 2000 and 4000 revolutions per minute (rpm). In a preferred embodiment the dispersion is decanted before centrifugation. The graphene flake dispersion which is formed by sonication and centrifugation is next filtered to remove the graphene flakes having lateral dimensions greater than 1 µm x 1 µm. Thus, a suspension containing graphene flakes having lateral dimensions less than 1 µm x 1 µm is obtained. In a particular embodiment, the graphene flakes have lateral dimensions of less than 800 nm x 800 nm, more preferably below 600 nm x 600 nm, even more preferably below 400 nm x 400 nm or below 200 nm x 200 nm. In a particular embodiment the lateral dimensions of the flakes in the invention are between 100 nm x 100 nm and 1 µm x 1 µm, preferably between 200 nm x 200 nm and 1 µm x 1 µm, preferably between 400 nm x 400 nm and 1 µm x 1 µm, more preferably between 600 nm x 600 nm and 800 nm x 800 nm. In a preferred embodiment, the flakes have lateral dimensions of 600 nm x 200 nm. The height of the graphene flakes is between 2 and 8 nm (end-points included); preferably between 6 and 8 nm.

Therefore a dispersion of graphene flakes having lateral dimensions of less than 1 µm x 1 µm in a solvent with a volatile organic solvent and at least 15% v/v water, with the proviso that the volatile organic solvent is neither ethanol nor isopropanol, nor acetone is obtained.

These graphene flake compositions present the same properties and can therefore be used like the graphene flake compositions containing at least 15% v/v water obtained according to the previous processes.

The present invention will now be described by way of examples which serve to illustrate the construction and testing of illustrative embodiments. However, it will be understood that the present invention is in no way limited to the examples set forth below.

### Example 1

### Preparation of graphene dried powder by solvent evaporation.

Graphene flake dispersions are prepared by adding 0,5 g powder of graphite with a particle diameter between 150 µm and 45 µm, to 10 mL of a tetrahydrofuran:water 4:1 mixture in a glass vial with inner diameter 20 mm. A graphene flake dispersion is prepared by sonication (380 Wat., 37 Hz) of the mixture above for 90 minutes, followed by centrifugation at 3000 rpm (553 g) for 60 minutes. The graphene flake dispersion is next filtered using an Acrodisc® syringe filter PTFE membrane (diam. 25 mm, pore size 1.0 µm) to remove the graphene flakes having lateral dimensions greater than 1 µm x 1 µm. The solid in the obtained dispersion is isolated by solvent evaporation at vacuum using a laboratory vacuum line (10⁻³² mbar) and 80°C for at least 2 hours. The resulting product, the graphene dried powder, is a black powder.

### Example 2

### Preparation of a graphene dried powder by precipitation

Graphene flake dispersions are prepared by adding 0,5 g powder of graphite with a particle diameter between 150 µm and 45 µm, to 10 mL of a tetrahydrofuran:water 4:1 mixture in a glass vial with inner diameter 20 mm . A graphene flake dispersion is prepared by sonication (380 Wat., 37 Hz) of the mixture above for 90 minutes, followed by centrifugation at 3000 rpm (553 g) for 60 minutes. The graphene flake dispersion is next filtered using an Acrodisc® syringe filter PTFE membrane (diam. 25 mm, pore size 1.0 µm) to remove the graphene flakes having lateral dimensions greater than 1 µm x 1 µm. The addition of diethyl ether to the sonicated and filtered solvent-water solution (1 mL of diethyl Ether per 4 mL of suspension), results in precipitation of a black powder that can be easily filtered using an Acrodisc® syringe filter PTFE membrane (diam. 25 mm, pore size 1.0 µm). Characterization of graphene dried powder obtained can be seen in figure 1.

### Example 3

### Preparation of a graphene flake composition in tetrahydrofuran with a water content of 0.05% by solvent evaporation.

Graphene flake dispersions are prepared by adding 0,5 g powder of graphite with a particle diameter between 150 µm and 45 µm, to 10 mL of a tetrahydrofuran:water 4:1 mixture in a glass vial with inner diameter 20 mm. A graphene flake dispersion is prepared by sonication (380 Wat., 37 Hz) of the mixture above for 90 minutes, followed by centrifugation at 3000 rpm (553 g) for 60 minutes. The graphene flake dispersion is next filtered using an Acrodisc® syringe filter PTFE membrane (diam. 25 mm, pore size 1.0 µm) to remove the graphene flakes having lateral dimensions greater than 1 µm x 1 µm. The solid in the obtained dispersion is isolated by solvent evaporation at vacuum using a laboratory vacuum line (10⁻³ mbar) and 80°C for at least 2 hours.

The graphene dried powder isolated is next re-dispersed into tetrahydrofuran just after sonication during 10 minutes. Thus, a graphene flake composition in tetrahydrofuran with 0.05% w/w water content is obtained. Re-dispersion yield was higher than 80%.

Other examples have been performed following the same above explained procedure but re-dispersing in other solvents to obtain:
4a) Graphene flake composition in dichloromethane with 0.01% w/w water content.
4b) Graphene flake composition in acetonitrile with 0.01% w/w water content.
4c) Graphene flake composition in acetone with 0.5% w/w water content.

The re-dispersion yield obtained in examples 4a, 4b and 4c resulted to be higher than 80 %.%.

### Example 4

### Preparation of a graphene flake composition in tetrahydrofuran with a water content of 0.05% by precipitation.

Graphene flake dispersions are prepared by adding 0,5 g powder of graphite with a particle diameter between 150 µm and 45 µm, to 10 mL of a tetrahydrofuran:water 4:1 mixture in a glass vial with inner diameter 20 mm . A graphene flake dispersion is prepared by sonication (380 Wat., 37 Hz) of the mixture above for 90 minutes, followed by centrifugation at 3000 rpm (553 g) for 60 minutes. The graphene flake dispersion is next filtered using an Acrodisc® syringe filter PTFE membrane (diam. 25 mm, pore size 1.0 µm) to remove the graphene flakes having lateral dimensions greater than 1 µm x 1 µm. The addition of diethyl ether to the sonicated and filtered solvent-water solution (1 mL of diethyl Ether per 4 mL of suspension), results in precipitation of a black powder that can be easily filtered using an Acrodisc® syringe filter PTFE membrane (diam. 25 mm, pore size 1.0 µm).

The graphene dried powder isolated is re-dispersed into tetrahydrofuran just after sonication during 10 minutes. Thus, a graphene flake composition in tetrahydrofuran with 0.05% w/w water content is obtained. Re-dispersion yield was higher than 80%.

Other examples have been performed following the same above explained procedure but re-dispersing in other solvents to obtain:
5a) Graphene flake composition in dichloromethane with 0.01% w/w water content.
5b) Graphene flake composition in acetonitrile with 0.01% w/w water content.
5c) Graphene flake composition in acetone with 0.5% w/w water content.

The re-dispersion yield obtained in examples 5a, 5b and 5c resulted to be higher than 80 %.

### Example 5

### Preparation of a graphene flake composition in a mixture containing 25% w/w water and tetrahydrofuran.

Graphene flake dispersions are prepared according to the process relating to a different aspect of the invention, which implies adding 0,5 g powder of graphite with a particle diameter between 150 µm and 45 µm, to 10 mL of a tetrahydrofuran:water 4:1 mixture in a glass vial with inner diameter 20 mm. A graphene flake dispersion is prepared by sonication (380 Wat., 37 Hz) of the graphite dispersion for 90 minutes, followed by centrifugation at 3000 rpm (553 g) for 60 minutes. The graphene flake dispersion is next filtered using an Acrodisc® syringe filter PTFE membrane (diam. 25 mm, pore size 1.0 µm)to remove the graphene flakes having lateral dimensions greater than 1 µm x 1 µm. Thus, a graphene flake composition with 25% w/w water content in tetrahydrofuran is obtained.

### Example 6

### Characterization of the graphene flakes by AFM, TEM and Raman spectroscopy.

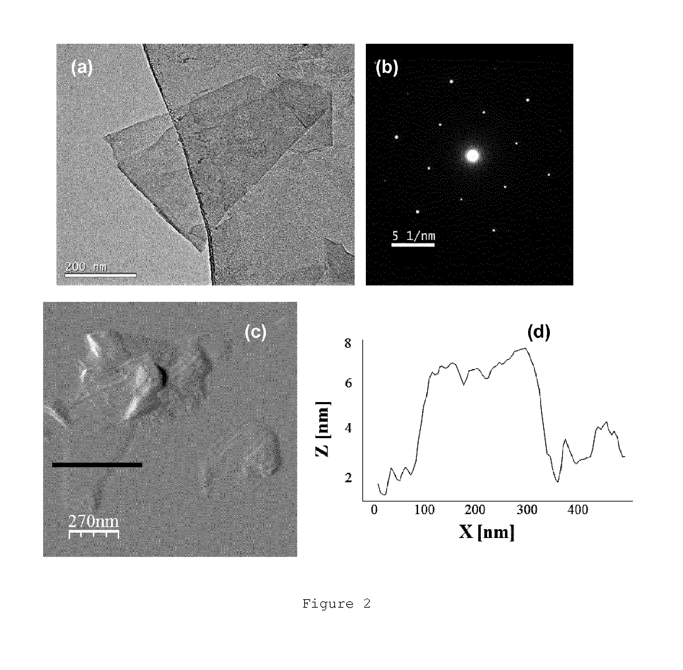

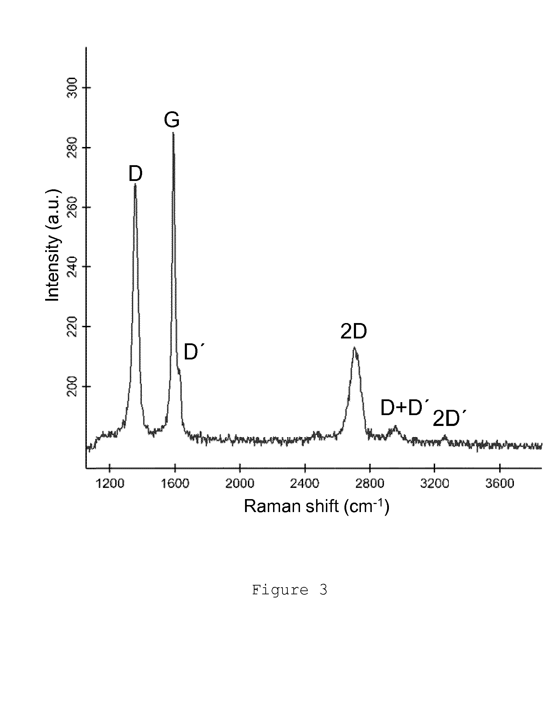

The dimensions and quality of the graphene flakes obtained according to the process of the invention (after step c) in the graphene dried powder were evaluated by AFM and TEM microscopies and electron diffraction measurements (Figure 2) and Raman spectroscopy (Figure 3). TEM images were obtained in a JEOL model Transmission Electron Microscope JEM 3000 F (field emission) with an accelerating voltage of 300 KV. The microscope has a multiscan CCD camera, XDS microanalysis, TEM and STEM operation modes, annular detector (HAADF). EELS analyses were carried out on a ENFINA electron energy loss spectroscopy (EELS), 1.7 Å point resolution and 25° tilt goniometer. AFM images were acquired in dynamic mode using a Nanotec Electronica system operating at room temperature in ambient air conditions. For AFM measurements, Olympus cantilevers were used with a nominal force constant of 0.75 N/m. The images were processed using WSxM. Results of AFM and TEM are consistent with the isolation crystalline of flakes 2-4 nm in height and lateral dimensions of from 600 nm x 200 nm.

The exfoliation level and the defect content of the graphene flakes were evaluated by Raman spectrum. Raman measurements were recorded on a WITec/Alpha 300AR Raman confocal microscope at ambient conditions. The laser wavelength and power were 532 nm and 0.7 mW, respectively. Figure 3 plots a typical Raman spectrum of the graphene flake composition deposited on SiO₂. Raman spectra of graphitic materials are characterized by a D-band (∼1360 cm-1), a G-band (∼1584 cm-1) and a 2D-band (∼2720 cm-1). Besides the G and 2D peaks, the spectrum of the graphene flake dispersion shows significant D and D' intensities and the combination mode D+D' ∼ 2950 cm-1. The D and D' peaks are assigned to the edges of the submicrometer flakes, rather than to the presence of a large amount of disorder within the flakes.

The D peak is due to the breathing modes of sp2 rings and requires a defect for its activation by double resonance. The 2D peak is the second order of the D peak. 2D peak is a single band in single layer graphene whereas it splits in four in bilayer graphene, reflecting the evolution of the band structure. The distribution of 2D peak position has two maxima, ∼2718 and 2722 cm-1, similar to the consistent with the samples being a distribution of single, bi and few layers graphene, but with a significant fraction of single layer graphene. This indicates that the graphene flake composition deposited on the substrate is made of randomly stacked graphene flakes.

The defect content can be characterized by the intensity of the D band relative to the G band, ID/IG. The spectrum shows D bands significantly larger than those of the starting graphite powder, indicating that the preparation process induces defects. Such defects can be of two main types: basal plane defects and edge defects. Basal plane defects can generally result in an obvious broadening of G band, which is often found in chemically reduced graphene and it is not the case that it is observed for the graphene flake composition (Figure 3). Edge defects is unavoidable, because cavitation-induced shear force and shock waves cut the initial large crystallite into smaller flakes and the dynamic flow during the vacuum filtration of the ink may tear or fold micrometer sheets into submicrometer ones. These smaller graphene flakes increases the content of edge defects. Therefore, the broadening of G band is not significant.

### Example 7

### Coating substrates with redispersed the graphene dried powder.

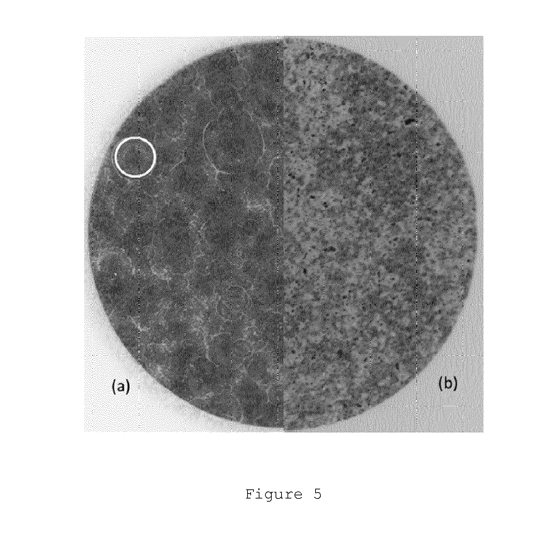

**(a)** Spray Deposition:
   (a) Graphene flake composition obtained after step c) of the process of the invention in THF:water (4:1), deposited by spray method in a glass substrate, while heated at 175°C. As shown in figure 5 a), the white rings correspond with "coffee rings" due to water content.
   (b) Redispersed graphene dried powder in THF, deposited by spray method in glass substrate, while heated at 175°C. No white rings are visible I figure 5 b).
**(b)** Film formation by centrifugation:
   A slide glass of 2 cm x 2 cm was located at the bottom of a 50 mL centrifuge tube filled with 15 mL of the graphene dried powder redispersed in THF as in example 3, and then centrifugated at 3000 rpm for 20 min (see figure 7).
(c)Patterning ink composition by Ink-jet Printing:
   Several arrays, including dots and lines, were ink-jet printed on a variety of substrates including SiO₂, gold, acetate paper and glass using an ink-jet printer (Dimatix Materials Printer, DMP-2800) with 1-16 nozzles with graphene dried powder redispersed as in example 3.

## Claims

1. Process for preparing graphene dried powder, comprising the following steps:
a) sonication of graphite in a mixture of water and a volatile organic solvent;
b) centrifugation of the product obtained in step a);
c) filtration of the product obtained in step b) to remove graphene flakes having lateral dimensions larger than 1 µm x 1 µm;
d) addition of a precipitating agent to the solution obtained in step c) to precipitate the graphene flakes, and filtration to collect graphene dried powder;
or alternatively,
d') solvent evaporation to obtain graphene dried powder.

2. Process according to claim 1, wherein the graphite is sonicated in a mixture containing at least 10% w/w water, preferably at least 15% w/w water.

3. Process according to any of claims 1 or 2, wherein the volatile organic solvent is selected from dichloromethane, acetonitrile, tetrahydrofurane, acetone, alkyl alcohols and mixtures thereof.

4. Graphene dried powder obtainable according to a process as defined in any of claims 1 to 3.

5. Process for preparing a graphene flake composition comprising graphene flakes having lateral dimensions of less than 1 µm x 1 µm and a matrix, said process comprising the step of redispersing the graphene dried powder obtained according to any of claims 1 to 3 in a matrix.

6. Process according to claim 5, wherein the matrix is selected from a volatile organic solvent, curable material and cement.

7. A graphene flake composition comprising graphene flakes having lateral dimensions of less than 1 µm x 1 µm dispersed in a matrix.

8. A graphene flake composition according to claim 7, wherein the matrix is selected from a volatile organic solvent, curable material and cement.

9. A graphene flake composition according to claim 8, wherein the matrix is a volatile organic solvent selected from dichloromethane, acetonitrile, tetrahydrofurane, acetone, alkyl alcohols and mixtures thereof, and wherein the water content of the composition is equal or lower than 30% (v/v).

10. A graphene flake composition according to claim 9, which is substantially devoid of water.

11. A graphene flake composition according to any of claims 7 to 10, wherein the lateral dimensions of the flakes are between 100 x 100 and 600 nm x 600 nm, and the height of the flakes is between 2 and 10 nm, preferably wherein the flakes have lateral dimensions of 600 nm x 200 nm and a height between 6 and 8 nm.

12. An ink composition comprising a graphene flake composition according to any of claims 7 to 11, optionally including dyes, resins, lubricants, solubilizers or surfactants.

13. Use of graphene dried powder according to claim 4 for the preparation of a graphene flake composition according to any of claims 7 to 12.

14. Use of a composition according to any of claims 7 to 12 for coating surfaces in particular ink-jet printing, spray deposition, centrifugation techniques, spin coating, drop casting, dip coating, electrospray and Meyer rod method.

15. Use according to claim 14, wherein coating, in particular ink-jet printing spray deposition, centrifugation techniques, spin coating, drop casting, dip coating, electrospray and Meyer rod method is performed on SiO₂, gold, acetate paper, or glass surfaces
